# EUROPEAN PATENT APPLICATION

(11) **EP 4 249 827 A1**
(43) Date of publication of application: **27.09.2023**
(21) Application number: 22163434.8
(22) Date of filing: 22.03.2022
(51) Int. Cl.: F24S 10/60, F24S 90/00, C02F 1/14, E03B 3/28

(54) **A PASSIVE SOLAR STILL UNIT AND A PLANT FOR TREATING SALTED WATER AND PRODUCING SALT**

(71) Applicant: Planet di Villa Alessandro & C. SAS, 25128 Brescia (IT)
(72) Inventor: BIANCIARDI, Alessandro, 50126 FIRENZE (IT); ZECCA, Alessandro, 60126 ANCONA (IT); VILLA, Alessandro, 25128 BRESCIA (IT)
(74) Representative: Dondi, Silvia

(57) **Abstract**

A passive solar still unit (1) comprising:
- a chamber (2) for collecting water;
- a case (3) delimiting the chamber (2), the case (3) having at least one transparent wall (7), an inlet (4) for water to be treated, a first outlet (5) for treated water and a second outlet (6) for brine;
- a corrugated plate (8) arranged inside the chamber (2), the corrugated plate (8) having peaks (8a) alternating to grooves (8b).

## Description

The present invention is relative to a passive solar still unit and to a plant for treating salted water and producing salt

The invention finds application in the technical field of seawater desalination and irrigation or in the treatment of polluted water.

Solar still solutions use direct solar radiation from the sun to desalinate saline water, based on evaporation and condensation process.

The still consists in a basin that is fed with saline water. The still is fully insulated on its sides and is covered with a transparent glass so that solar energy may radiate through it.

Upon being hit by radiation, the saline water starts to evaporate. The water vapour then condensates on the glass cover, and the condensate is collected.

Solar stills solutions are mainly used in emergency contexts, like remote lands, developing countries, rural lands, or small communities, since they achieve poor volume of distilled water.

Indeed, higher volumes demand higher evaporating surfaces, thus higher bulk of the whole plant.

In addition, the disposal of the brine produced by the evaporation of water is an environmental concern. Usually, the brine is reintroduced into the sea, generating a high environmental impact.

Document CN111348709 proposes a seawater desalination and irrigation integrated full-automatic floating platform comprising a full-passive solar distillation module, an irrigation module, a connecting module, and a buoyancy device.

The full-passive solar distillation module comprises a water tank, an automatic water supplementing evaporator, a collecting tank, a daylighting panel, a condensation plate, and a baffle plate. The automatic water supplementing evaporator comprises a plate wall, a foam block and fiber cotton cloth. A heat conducting plate is arranged at one end of the condensation plate and extends into the water tank. The lower surface of the daylighting panel is coated with a transparent anti-fog coating. The irrigation module comprises a water storage part containing soil and hydrogel.

Document CN108633541 discloses a direct integration and communication between a desalination unit and plant incubators.

Other technology for obtaining distilled water, like reverse osmosis, have better performances in terms of volume, but raise issues of complexity and high costs.

There is felt the need to develop trade-off solutions between high performances and high dimensions/costs.

In this context, the technical task at the basis of the present invention is to propose a passive solar still unit and a plant for treating salted water and producing salt, which overcome the above-mentioned drawbacks of the prior art.

In particular, the object of the present invention is to propose a passive solar still unit that for use in technologies designed to increase water and soil availability for cropland and reforestation.

Another object of the present invention is to propose a passive solar still unit that allows to obtain high volumes of distilled water while maintaining moderate dimensions and complexity.

Another object of the present invention is to propose a passive solar still unit and a plant for treating salted water and producing salt, both having a reduced environmental impact over the prior art solutions.

Another object of the present invention is to propose a passive solar still unit and a plant for treating salted water and producing salt, that show a higher thermal efficiency than prior art solutions.

The stated technical task and specified objects are substantially achieved by a passive solar still unit, comprising:
- a chamber for collecting water;
- a case delimiting the chamber, the case having at least one transparent wall, an inlet for water to be treated, a first outlet for treated water and a second outlet for brine;
- a corrugated plate arranged inside the chamber and having peaks alternating to grooves.

According to one aspect of the invention, the corrugated plate comprises a set of steps, each step consisting of a rise and a tread.

In particular, each tread has a longitudinal edge that is partly delimited by a projecting portion.

Preferably, the projecting portions are parallel but misaligned so as to create a serpentine path for water or brine.

For example, the corrugated plate is made by a thermoformed polymer. According to one aspect of the invention, the passive solar still unit further comprises strips of porous material deposited on an upper surface of the corrugated plate.

According to one aspect of the invention, the passive solar still unit further comprises metal or mineral layers deposited on the upper surface of the corrugated plate.

In one embodiment, the layers alternate to the strips of porous material on the upper surface of the corrugated plate.

According to one aspect of the invention, the porous material of the strips is a three-dimensional fabric made of natural fibers and/or polymeric fibers or is activated carbon or bamboo charcoal.

According to one aspect of the invention, each layer comprises graphite flakes or steel flakes or Aluminium flakes or a steel plate or a graphite plate. In one embodiment, the passive solar still unit further comprises an external channel located downstream the case for collecting rainwater and/or dew condensed on the transparent wall.

The stated technical task and specified objects are substantially achieved by a plant for treating salted water and producing salt, comprising:
- a passive solar still unit according to the present invention;
- an apparatus for producing salt comprising at least one basin that is in fluid communication with the second outlet of the passive solar still unit for receiving the brine.

In particular, the basin is arranged below the passive solar still unit. According to one embodiment of the invention, the apparatus further comprises a first series of fans arranged on a side of the basin.

According to another embodiment of the invention, the apparatus further comprises a second series of fans arranged above the basin.

According to an embodiment of the invention, the apparatus comprises a plurality of basins in fluid communication with the second outlet for receiving the brine.

Further characteristics and advantages of the present invention will more fully emerge from the non-limiting description of a preferred but not exclusive embodiment of a passive solar still unit and of a plant for treating salted water and producing salt, as depicted in the attached figures:
- figure 1 illustrates a passive solar still unit, according to the present invention, in a perspective view;

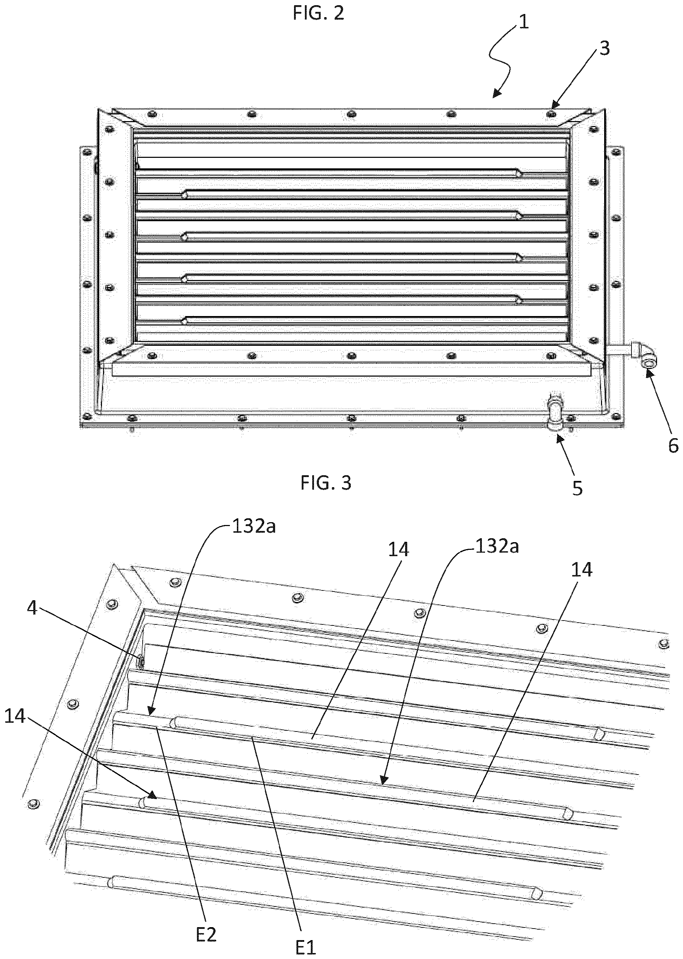

- figure 2 illustrates the passive solar still unit of figure 1, in a frontal view;
- figure 3 is a detail of figure 1, in a zoom view;
- figure 4 illustrates the passive solar still unit of figure 1, in a lateral cross-sectional view;
- figure 5 is a detail of figure 4, in a zoom view;
- figure 6 illustrates an alternative embodiment of the passive solar still unit, according to the invention, in a lateral cross-sectional view;
- figures 7-8 illustrate the passive solar still unit in an installed configuration, in two different perspective views;
- figures 9-10 illustrate a cascade of passive solar still units, according to the present invention, respectively in a lateral view and in a frontal view;
- figure 11 illustrates an apparatus for producing salt, according to an embodiment of the present invention, in a perspective view;
- figure 12 illustrates an apparatus for producing salt, according to another embodiment of the present invention, in a perspective view;

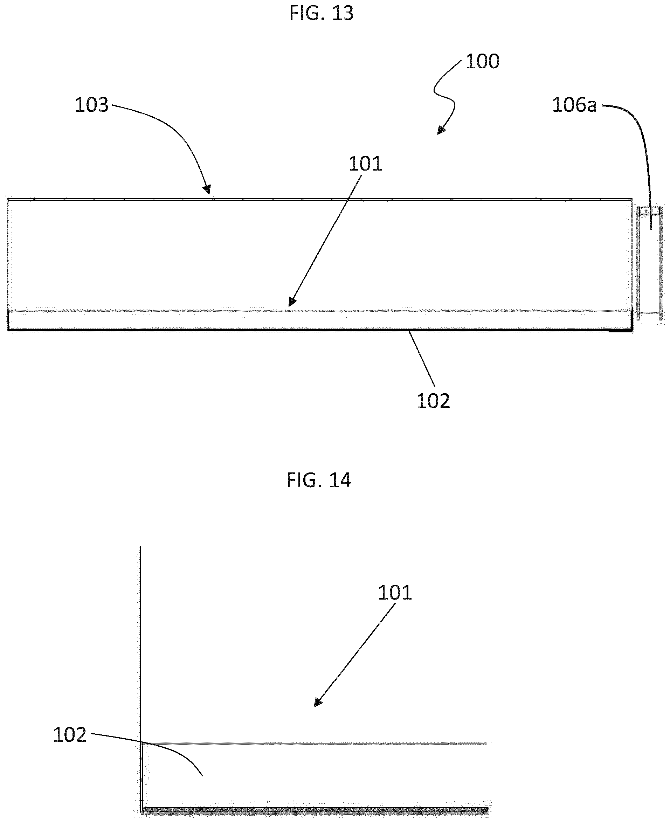

- figure 13 illustrates the apparatus for producing salt of figure 12, in a lateral cross-section view;
- figure 14 is a detail of figure 13, in a zoom view;
- figure 15 illustrates an apparatus for producing salt, according to another embodiment of the present invention, in a perspective view.

With reference to the figures, number 1 indicates a passive solar still unit (shortly "still unit") comprising a chamber 2 for collecting water and a case 3 delimiting the chamber 2.

The case 3 has an inlet 4 for water to be treated.

According to an application of the invention, the inlet 4 receives salted water from the sea or from brackish groundwater aquifers or from a salted lake, either directly or indirectly.

According to another application of the invention, the inlet 4 receives polluted water that needs to be purified.

For the sake of conciseness, the description below refers to the use of the still unit 1 with salted water.

The case 3 also has a first outlet 5 for treated water (i.e. distilled water) and a second outlet 6 for brine, obtained by the evaporation process. According to an aspect of the invention, the inlet 4 for salted water is located at an opposite side of the case 3 relative to first outlet 5 and the second outlet 6. This will be better explained later.

The case 3 has at least one transparent wall 7 that acts as an upper cover. Preferably, the transparent wall 7 is made by glass, in particular tempered glass.

Alternatively, the transparent wall 7 is made of a polymeric material. According to an aspect of the invention, an inner coating may be deposited on an inner surface of the transparent wall 7.

For example, the inner coating is made of a hydrophilic material so as to increase the condensation process.

According to an aspect of the invention, an outer coating may be deposited on an outer surface of the transparent wall 7.

For example, the outer coating is made of a hydrophobic material so as to be self-cleaning.

Alternatively, the outer coating is made of a hydrophilic material so as to increase dew condensation. This is the case where the still unit 1 also envisages the collection of rainwater, as it will be explained later.

Advantageously, the still unit 1 comprises a corrugated plate 8 arranged inside the chamber 2.

In particular, the corrugated plate 8 is mounted on a supporting panel 9 that leans on a bottom wall 10 of the case 3.

For example, the corrugated plate 8 has an end that is integrally fixed to the support panel 9.

According to an embodiment, the supporting panel 9 is made of glass wool for increasing insulation of the chamber 2.

In alternative embodiments, the supporting panel 9 may be made of mineral wool, or compact insulating materials (like polystyrene) or natural insulating materials (like cork) or foams or expanded polyurethane/polyethylene. The case 3 also comprises seal means 11 operatively active on its walls so that the chamber 2 is tight sealed from the outside. The seal means 11 are of a known type and will not be further described.

When in use the case 3 is arranged on a terrain or a floor T so that the transparent wall 7 is exposed to solar radiation.

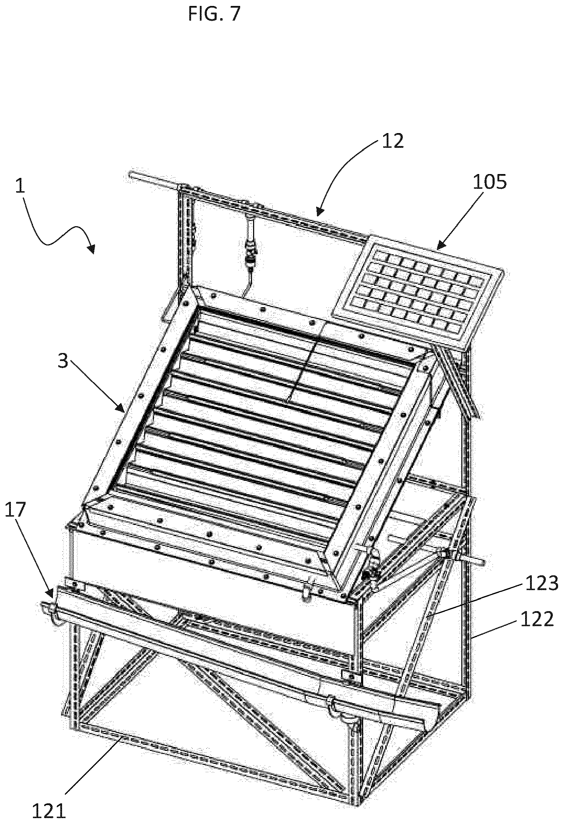

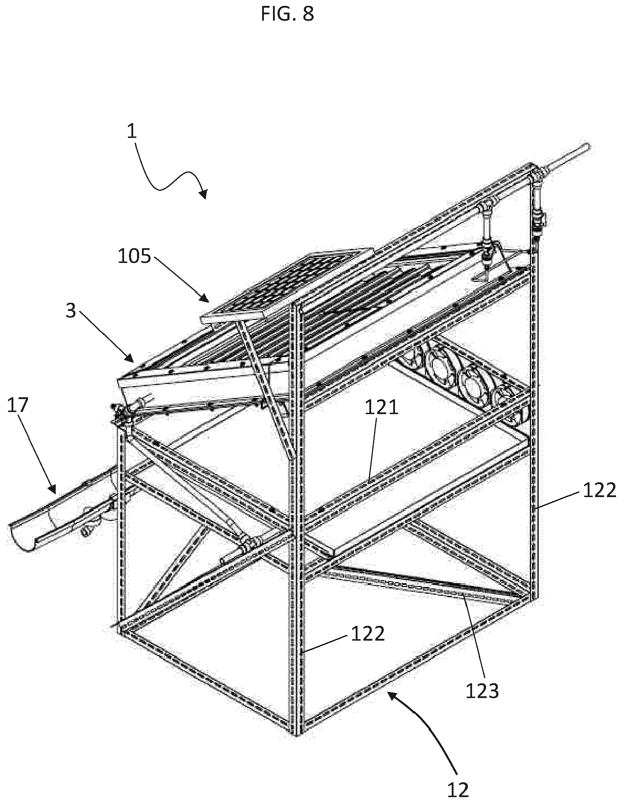

According to one aspect of the invention, the still unit 1 comprises a frame 12 adapted to be positioned on the terrain T. In particular, in an installed configuration of the still unit 1 the case 3 is arranged on the frame 12 so that the corrugated plate 8 is inclined with respect to the terrain T. This is shown in figures 7 and 8.

Preferably, the frame 12 comprises beams 121, pillars 122 and diagonal bars 123 for reinforcing the structure. The beams 121, the pillars 122 and the diagonal bars 123 are preferably made of metal and are perforated so as to be easily assembled / disassembled.

According to one aspect of the invention, the corrugated plate 8 is made by a thermoformed polymer.

The corrugated plate 8 has peaks 8a alternating to grooves 8b.

According to an embodiment, the corrugated plate 8 has a periodical development, that means the distance between two consecutive peaks 8a or two consecutive grooves 8b is constant.

According to a preferred embodiment, illustrated herewith, the corrugated plate 8 comprises a set of steps 13, each step 13 consisting of a rise 131 and a tread 132.

The number of steps 13 is chosen depending on specific needs.

Looking at the steps 13 in the direction of climbing up, the line of intersection of one tread 132 with the adjacent rise 131 just above defines a groove 8b, whereas the line of intersection of one rise 131 with the adjacent tread 132 just above defines a peak 8a.

In particular, a tread 132 and an adjacent rise 131 intersect orthogonally in a corresponding groove 8b, i.e. forming a 90° angle.

Analogously, a rise 131 and an adjacent tread 132 intersect orthogonally in a corresponding peak 8a, i.e. forming a 90° angle.

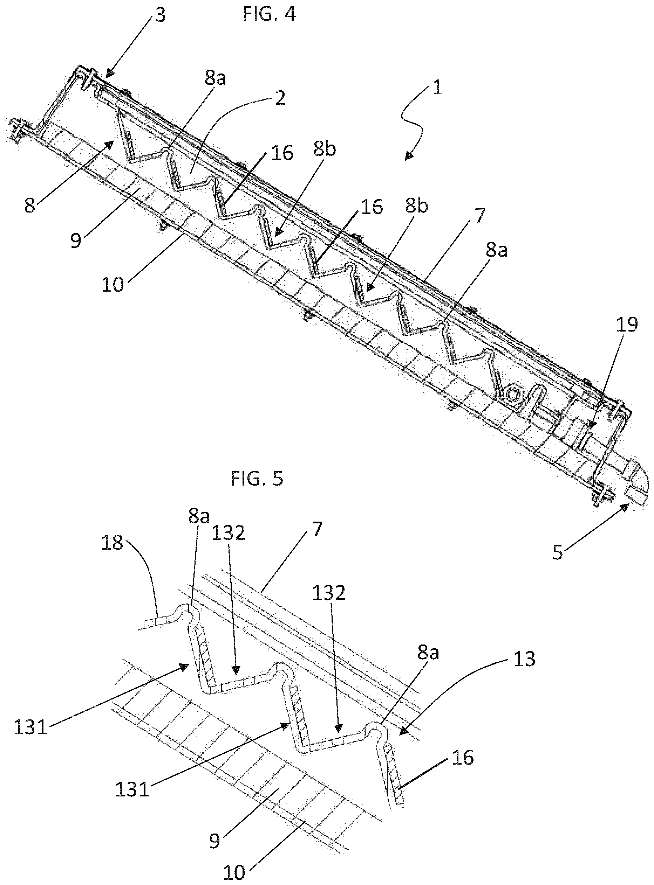

In the embodiments illustrated in figures 4 to 6, the peaks 8a are not sharp but they have a cross-sectional rounded profile.

The length of the rises 131 and treads 132 is comprised between 750 mm and 1000 mm.

The width of the rises 131 and treads 132 may be identical or different. For example, the width of the rises 131 and treads 132 is comprised between 35 mm and 55 mm.

For each step 13, the corresponding tread 132 has a longitudinal edge 132a that is partly delimited by a projecting portion 14.

In particular, the projecting portion 14 has a height comprised between 10 mm and 20 mm and a width comprised between 15 mm and 30 mm.

The projecting portion 14 delimits only a first tract E1 of the longitudinal edge 132a. A second tract E2 of the longitudinal edge 132a, contiguous to the first tract E1, is not delimited by the projecting portion 14.

In particular, the second tract E2 is shorter than the first tract E1. Preferably, all the first tracts E1 have the same length and all the second tracts E2 have the same length.

Thus, all the projecting portions 14 of the still unit 1 have the same length (which is substantially the length of the first tracts E1).

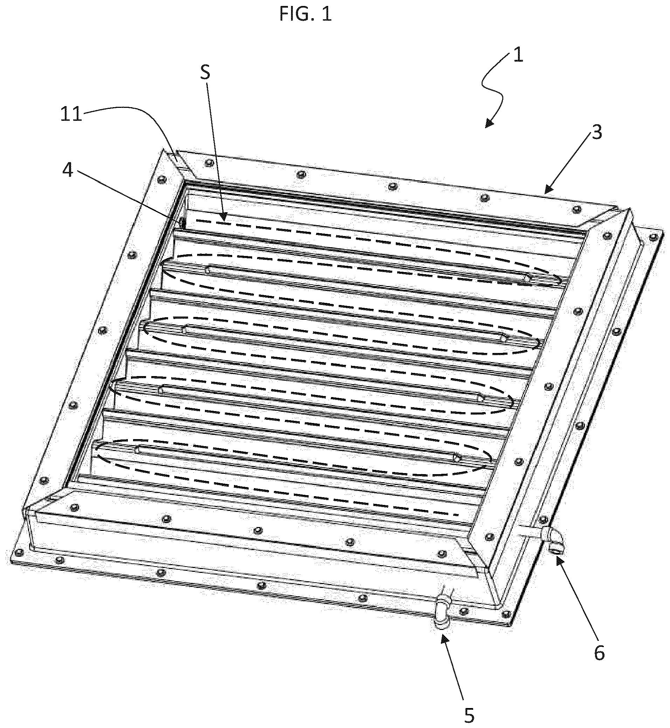

The projecting portions 14 are parallel since they develop along the first tracts E1 of the longitudinal edges 132a of the treads 132, which are parallel. Advantageously, the projecting portions 14 are misaligned so as to create a serpentine path S for water/brine obtained in the corrugated plate 8. This is shown in figure 1.

Preferably, the inlet 4 for salted water is located at an end of the serpentine path S, while the second outlet 6 for the brine is located at the other end of the serpentine path S.

In practice, in the descent direction of the steps 13, the second tract E2 of a given tread 132 is followed by a first tract E1 of the tread 132 immediately downward, which is followed by a second tract E2 of the tread 132 immediately downward, and so on.

In other words, the second tracts E2 alternate being positioned on the right end and on the left end of the corrugated plate 8. Accordingly, the same is for the first tract E1.

According to one aspect of the invention, the still unit 1 comprises strips 15 of porous material deposited on an upper surface 18 of the corrugated plate 8.

The strips 15 of porous material absorb the water and allow to increase the evaporating surface thanks to capillarity action.

According to one aspect of the invention, the still unit 1 comprises metal or mineral layers 16 deposited on the upper surface 18 of the corrugated plate 8. In this context, the metal or mineral layers 16 are also shortly referred to as "layers".

These layers 16 improve the heat absorption by water and/or heat distribution so as to achieve a higher thermal efficiency in evaporating water. In addition, the layers 16 increase the light reflection within the chamber 2, thus contributing to evaporating water.

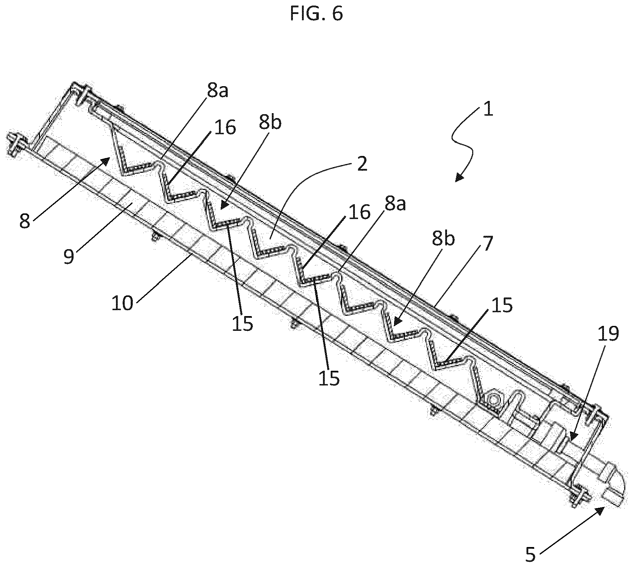

According to a preferred embodiment, both the strips 15 of porous material and the metal or mineral layers 16 are present on the upper surface 18 of the corrugated plate 8. This is shown in the embodiment of figure 6. Preferably, the layers 16 alternate to the strips 15 of porous material on the upper surface 18 of the corrugated plate 8.

In one embodiment, the number of strips 15 is identical to the number of rises 131 and the number of layers 16 is identical to the number of treads 132 of the corrugated plate 8.

In particular, each strip 15 is deposited on one of the rises 131 and each layer 16 is deposited on one of the treads 132.

In another embodiment, the number of strips 15 is identical to the number of treads 132 and the number of layers 16 is identical to the number of rises 131 of the corrugated plate 8.

In particular, each strip 15 is deposited on one of the treads 132 and each layer 16 is deposited on one of the rises 131.

According to another embodiment, only the strips 15 are present. They may be deposited on the rises 131 and/or on the treads 132 of the steps 13. According to another embodiment, only the layers 16 are present. They may be deposited on the rises 131 and/or on the treads 132 of the steps 13.

In one embodiment, each strip 15 is obtained by a three-dimensional fabric. This may be made of natural fibers (i.e. cotton, bamboo, etc.) or of polymers or a mixture of natural fibers and polymers.

In another embodiment, the porous material of the strips 15 is a fabric with metallic fibers and/or interwoven natural fibers, metallic fibers, and polymeric fibers.

In another embodiment, the porous material of the strips 15 is a spongy material like activated carbon or bamboo charcoal.

All the strips 15 may be made by the same material or may be made by different materials, in particular chosen from the examples listed above.

According to one embodiment, the layers 16 are plates, such as steel plates or graphite plates.

According to another embodiment,
each layer 16 may comprise graphite flakes, or steel flakes or Aluminium flakes.

All the layers 16 may be made by the same material or may be made by different materials, in particular chosen from the examples listed above.

According to the dimensions indicated above for the rises 131 and treads 132, the corrugated plate 8 may be inclined of an angle of 25°-45° with respect to the terrain T.

According to an aspect of the invention, the still unit 1 further comprises also an external channel 17 for collecting rainwater, as shown in figures 7-8.

In particular, the external channel 17 is arranged downstream the case 3 so as to also receive the condensed dew from the outer surface of the transparent wall 7.

According to an aspect of the invention, the still unit 1 also comprises an internal channel 19 for the distilled water that is located within the chamber 2.

In particular, the internal channel 19 is arranged so as to receive the condensate derived from the evaporation process of the salted water from the inner surface of the transparent wall 7.

Preferably, the internal channel 19 is inclined of 1°-3° with respect to the transparent wall 7.

The internal channel 19 has an end that emerges in the first outlet 5.

Preferably, the external channel 17 and the first outlet 5 are directed to a common circuit for collecting fresh water (not salted).

In an embodiment, shown in figure 7, the external channel 17 is arranged downstream the first outlet 5.

According to an aspect of the invention, the inlet 4 for salted water is located at a higher level than the first outlet 5 so that the distilled water collected by the internal channel 19 can be drawn out of the case 3 for gravity.

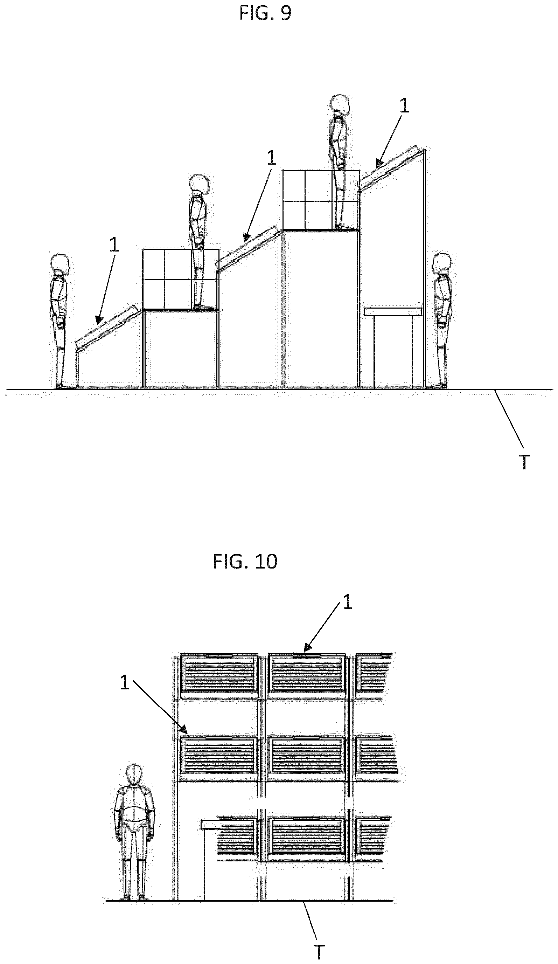

Figures 9 and 10 illustrate a plurality of still units 1 that are arranged in a cascade.

In fact, sill units 1 may be arranged in series so as to increase the rate production depending on the needs.

The frames 12 of the still units 1 have a different height with respect of the terrain T so that cases 3 are at different levels. Accordingly, the brine exiting from the highest case 3 is fed into the case 3 immediately downward so as to undergo another evaporation phase, and so on until the lowest case 3 is reached and the brine is finally collected.

The cases 3 may be identical or may have different capacity.

In particular, the capacity (and thus the dimensions) of a case 3 is set by increasing or decreasing the number of steps 13 of the corrugated plate 8. With reference to the figures, number 100 indicates an apparatus for producing salt, comprising a basin 101.

According to one example, the basin 101 is made of a polymeric material (i.e. polycarbonate) or Aluminium laminate.

According to an embodiment, a slab 102 is arranged on the bottom of the basin 101 for facilitating the salt precipitation and collection. The slab 102 is preferably made by wood or plastic.

According to an embodiment, a cover 103 is placed at least above a part of the basin 101.

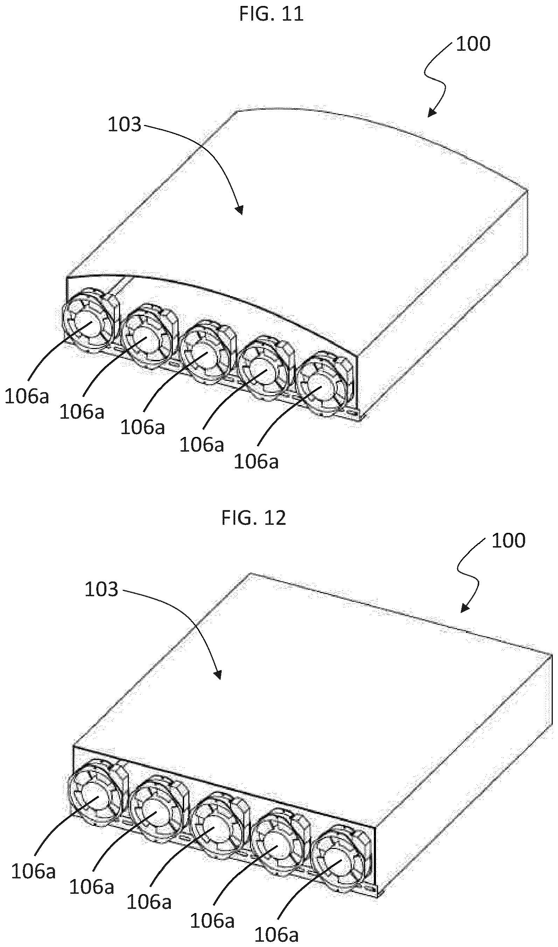

According to one embodiment, illustrated in figure 11, the cover 103 has a concave shape.

According to another embodiment, illustrated in figure 12, the cover 103 has a planar shape.

According to one aspect of the invention, the cover 3 may also be innerly coated with hydrophilic or hydrophobic layers.

According to an aspect of the invention, the apparatus 100 is provided with one or more fans 106a, 106b.

In one embodiment, the apparatus 100 comprises a first series of fans 106a arranged on a side of the basin 101. For example, the first series of fans 106a is arranged on a short side of the basin 101 so that the fans 106a generate a longitudinal air flow along the basin 101. This is shown in the embodiments of figures 11-12.

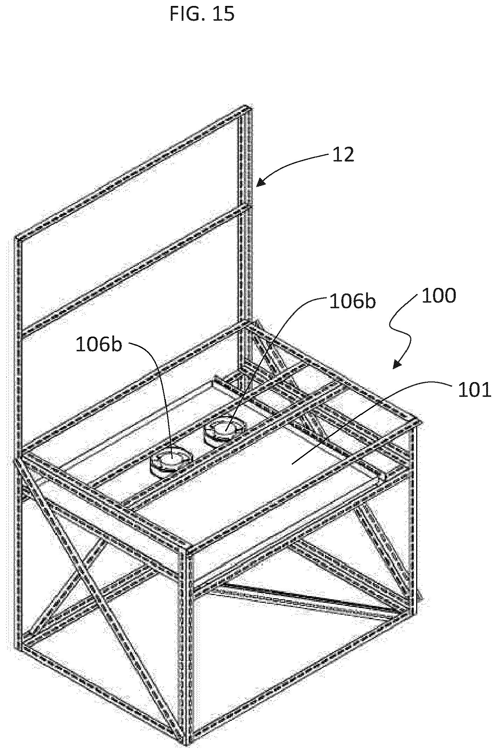

In another embodiment, the apparatus 100 comprises a second series of fans 106b arranged above the basin 101 so that the fans 106b generate an air flow that is perpendicular to the brine surface. This is shown in figure 15. According to another embodiment, the apparatus 100 comprises both the first series of fans 106a and the second series of fans 106b.

According to an aspect of the invention, the apparatus 100 may be arranged alongside a passive solar still unit 1 according to the invention.

In a preferred embodiment of the invention, the apparatus 100 is arranged below the case 3 of the passive solar still unit 1 so as to receive the brine from the second outlet 6.

In particular, in the embodiment of figure 15 the apparatus 100 is mounted on the same frame 12 of the still unit 1. For the sake of simplicity, figure 15 illustrates only the apparatus 100 for producing salt installed on the frame 12.

The still unit 1, which has been removed from figure 15, may be arranged above the fans 106b of the second series.

In particular, the fans 106b are mounted on a higher level with respect to the basin 101.

Thus, the apparatus 100 for producing salt may be combined with the still unit 1 to obtain an integrated plant for treating salted water and for producing salt therefrom.

In particular, the basin 101 is in fluid communication with the second outlet 6 of the passive solar still unit 1 for receiving the brine.

The arrangement of the apparatus 100 and of the still unit 1 on the same frame 12 results in a very compact plant.

According to one embodiment, the apparatus 100 comprises a plurality of basins 101 in fluid communication with the second outlet 6 for receiving the brine. The basins 101 may be arranged in series or in parallel to distribute brine at different a salt concentration.

According to a preferred embodiment, the apparatus 100 comprises a plurality of sensors (not illustrated) configured to detect values of a physical magnitude representing a property of the water and/or brine.

The apparatus 100 further comprises an electronic control unit (not illustrated) that is configured to receive data from one or more of the sensors and, in response to them, to control the water flow and the production rate. According to an embodiment (not shown), the apparatus 100 further comprises an organic incubator for the growth of plants. The organic incubator is irrigated with the fresh water obtained by the still unit 1. Preferably, the apparatus 100 comprises a plurality of further sensors (not illustrated) configured to detect values of a physical magnitude representing a property of the plants growing in the organic incubator.

In this case, the electronic control unit is further configured to receive data from one or more of the further sensors and, in response to them, to monitor the growing of the plants.

In particular, energy is supplied to the electronic control unit by portable accumulator means (i.e. batteries) or by at least one solar panel 105. Preferably, the solar panel 105 is mounted on the frame 12 of the still unit 1.

The electronic control unit preferably comprises a wireless transmission module so that the received data may be sent to a remote server for being archived.

The functioning of the passive solar still unit and of the apparatus for producing salt, according to the present invention, is described below. The salted water is introduced into the chamber 2 by means of the inlet 4 and start flowing on the corrugated plate 8.

In particular, the salted water is fed continuously to the chamber 2 and with a constant flow rate by known means.

For example, the salted water is fed by a dripper (not illustrated) located upstream the case 3.

In particular, the water follows the serpentine path S created by the misaligned disposition of the projecting portions 14.

Considering an initial step 13 of the corrugated plate 8, the salted water follows the tread 132 for a first tract E1. The water does not fall down from the first tract E1 thanks to the projecting portion 14 acting as a barrier. Upon arriving in the second tract E2, with is free from barrier, the water falls on the tread 132 immediately downstream.

As already explained above, in the tread 132 immediately downstream, the water arrives in correspondence of the first tract E1 that is protected by its own projecting portion 14. The water then flows towards the second tract E2, which is free, and falls on the tread 132 immediately downstream. The salted water is thus routed along the serpentine path S where it is exposed to the solar radiation passing through the transparent wall 7. Thus, the evaporation process is started and continues along the whole serpentine path S from the inlet 4 to the second outlet 6.

The step-configuration of the corrugated plate 8 aims at slowing down the flow of water/brine, thus increasing the time of exposure to the solar radiation.

The water is advantageously retained in the grooves 8b of the corrugated plate 8, which prolong the exposure the solar radiation.

The evaporated water leaves the brine on the corrugated plate 8, while the water vapour condensate on the transparent wall 7.

The condensed water, which is distilled water, is collected by the internal channel 19 and directed to the first outlet 5.

The brine descends the serpentine path S, at the end of which reaches the second outlet 6.

The brine is then routed in the basin 101 arranged downstream the still unit 1, preferably below the case 3, like in figure 15. The flow of the brine from the still unit 1 to the basin 101 may be continuous or in batch.

Since the basin 101 is directly exposed to solar radiation, the evaporation is prosecuted therein.

The salt crystals are obtained in the basin 101 and collected on the slab 102. The fans 106a, 106b speed up the evaporation by creating air turbulence that removes the water vapour so increasing the salt concentration.

The water vapour is preferably guided towards a condensing system (not shown) by the cover 103 of the basin 101, which acts as a funnel.

The characteristics and the advantages of the passive solar still unit and of the plant for treating salted water and producing salt, according to the present invention, are clear, as are the advantages.

Thanks to the corrugating plate and the definition of a serpentine path for water, the evaporating efficiency is increased over the prior art.

In addition, the strips of porous material and the mineral/metal layers arranged on the steps contribute to increase the evaporating efficiency. The still unit may be also used for purifying polluted water. In fact, the polluted water is pasteurized within still unit, wherein the heating process reduces the bacterial contents.

The sill unit is a simple and compact module that may be easily assembled and installed and is adaptable to different backgrounds.

In particular, procurement of the components necessary to assemble the still unit is quite straightforward in most of the countries, even the developing country. The only customized component is the corrugated plate, that is nevertheless easily manufactured and shipped everywhere in a compact package.

In addition, sill units may be arranged in series so as to increase the rate production depending on the needs.

The structure is flexible and versatile since the cases are installed on frames that may be assembled easily according to different pendencies.

In addition, disposal of the brine is no more a concern, since the brine is fed to the basin arranged below the still unit and salt crystals are obtained at the end of the process.

Furthermore, arranging the basin just below the still unit allows to create an integrated plant or "salt factory" in the same place of the still unit, thus reducing the overall dimensions.

The fresh water obtained at the end of the process may be used for land regeneration or for drinking.

## Claims

1. A passive solar still unit (1) comprising:
- a chamber (2) for collecting water;
- a case (3) delimiting the chamber (2), said case (3) having at least one transparent wall (7), an inlet (4) for water to be treated, a first outlet (5) for treated water and a second outlet (6) for brine;
**characterised in that** it comprises a corrugated plate (8) arranged inside the chamber (2), said corrugated plate (8) having peaks (8a) alternating to grooves (8b).

2. The passive solar still unit (1) according to claim 1, wherein the corrugated plate (8) comprises a set of steps (13), each step (13) consisting of a rise (131) and a tread (132).

3. The passive solar still unit (1) according to claim 2, wherein each tread (132) has a longitudinal edge (132a) that is partly delimited by a projecting portion (14).

4. The passive solar still unit (1) according to claim 3, wherein the projecting portions (14) are parallel but misaligned so as to create a serpentine path (S) for water or brine.

5. The passive solar still unit (1) according to anyone of the previous claims, wherein the corrugated plate (8) is made by a thermoformed polymer.

6. The passive solar still unit (1) according to any one of the previous claims, further comprising strips (15) of porous material deposited on an upper surface (18) of the corrugated plate (8).

7. The passive solar still unit (1) according to claim 6, further comprising metal or mineral layers (16) deposited on the upper surface (18) of the corrugated plate (8).

8. The passive solar still unit (1) according to claim 7, wherein said layers (16) alternate to the strips (14) of porous material on the upper surface (18) of the corrugated plate (8).

9. The passive solar still unit (1) according to any one of the claims 6 to 8, wherein the porous material of the strips (15) is a three-dimensional fabric made of natural fibers and/or polymeric fibers or is activated carbon or bamboo charcoal.

10. The passive solar still unit (1) according to claim 7 or 8, wherein each of said layers (16) comprises graphite flakes or steel flakes or Aluminium flakes or a steel plate or a graphite plate.

11. The passive solar still unit (1) according to anyone of the previous claims, further comprising an external channel (17) located downstream the case (3) for collecting rainwater and/or dew condensed on the transparent wall (7).

12. A plant for treating salted water and producing salt, comprising:
- a passive solar still unit (1) according to any of the preceding claims;
- an apparatus (100) for producing salt comprising at least one basin (101) that is in fluid communication with the second outlet (6) of the passive solar still unit (1) for receiving the brine, the basin (101) being arranged below said passive solar still unit (1).

13. The plant according to claim 12, wherein said apparatus (100) further comprises a first series of fans (106a) arranged on a side of the basin (101).

14. The plant according to claim 12 or 13, wherein said apparatus (100) further comprises a second series of fans (106b) arranged above the basin (101).

15. The plant according to any one of claims 12 to 14, wherein the apparatus (100) comprises a plurality of basins (101) in fluid communication with the second outlet (6) for receiving the brine.
